(19) Europäisches Patentamt
European Patent Office
Office européen des brevets

(11) EP 2 390 384 A1

(12) **EUROPEAN PATENT APPLICATION**
published in accordance with Art. 153(4) EPC

(43) Date of publication:
**30.11.2011 Bulletin 2011/48**

(51) Int Cl.:
*C25B 1/04* (2006.01)      *B01D 67/00* (2006.01)
*H01M 8/10* (2006.01)

(21) Application number: **10733270.2**

(22) Date of filing: **18.01.2010**

(86) International application number:
**PCT/ES2010/070020**

(87) International publication number:
**WO 2010/084227 (29.07.2010 Gazette 2010/30)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **21.01.2009 ES 200900163**

(71) Applicant: **Hydrogen Works, S.L.
40140 Valverde del Majano (Segovia) (ES)**

(72) Inventors:
• **BLACH VIZOSO, Ricardo**
  **E-40140 Valverde del Majano (Segovia) (ES)**
• **GOMEZ RIVAS, Antonio**
  **E-40140 Valverde del Majano (Segovia) (ES)**

(74) Representative: **Capitan Garcia, Maria Nuria
Felipe IV no. 10
28014 Madrid (ES)**

(54) **HYDROGEN GENERATOR**

(57) The invention relates to a hydrogen generator comprising a stack (1) of least one functional element with an anode (2) for the production of oxygen, a cathode (3) for the production of hydrogen and a membrane (4) positioned between the anode (2) and the cathode (3). In said generator the anode (2) is communicated with the anode separator (5) and the cathode (3) is communicated with a cathode separator (6), said separators (5, 6) having a free variable volume. The aforementioned stack (1) is located inside a sealed chamber (7) into which a gas is introduced via a gas inlet (8) in order to pressurise the interior of the chamber (7). The invention also includes a processor which maintains the ratio between the anode and cathode pressures and between the free variable volume of the cathode separator (6) and the free variable volume of the anode separator (5) greater than or equal to 2:1.

FIG. 1

EP 2 390 384 A1

## Description

### FIELD OF THE INVENTION

The present invention relates to the field of hydrogen generators. More specifically, the present invention describes a generator capable of producing hydrogen at a pressure higher than the pressure of the atmosphere that surrounds the stack and membranes suitable for operating at said pressures without problems.

### BACKGROUND TO THE INVENTION

The invention relates to a generator for producing hydrogen and oxygen by water electrolysis in the so-called PEM class, i.e. Proton Exchange Membrane. These devices comprise a variable number of functional elements, stacked in series to form a stack.

The mechanical resistance of the membranes acting as an electrolyte and physically separating the anodic and cathodic circuits inside the hydrogen generator enables different pressures to prevail in both circuits. This pressure, called the differential pressure, is limited not only by the mechanical resistance of the membrane but also by the stability of its electrochemical properties, due especially to their gas permeability, or crossover in English terminology. The permeability is not only dependent on the absolute differential pressure but it is also a function of the partial pressures of the gases present in the hydrogen and oxygen generator.

In addition there are absolute pressure limits in both circuits established by the confinement capacity of the sealing elements or seals. The differential pressure corresponds in this case to the difference in pressure between the inside of each circuit and the external pressure. The generator is therefore conditioned by five different pressure values: the pressure of the anodic circuit, the pressure of the cathodic circuit, the partial oxygen pressure in the anodic circuit, the partial hydrogen pressure in the cathodic circuit and the external pressure.

There are various factors which render it difficult to market hydrogen generators of the PEM type commercially

One of them is the low energy density of the hydrogen produced, which almost always makes it necessary to install one or more subsequent mechanical gas compression stages, which drastically reduces the energy efficiency of the assembly because mechanical compression is a process with a high energy consumption during which major mechanical and thermal losses take place. Moreover, the mechanical compression systems normally require maintenance, which means that their operating cost is also high.

In addition, the membranes of prior art for hydrogen generators are not capable of withstanding pressures that are considerably higher than atmospheric pressure and cannot be used in environments where the pressure exceeds these values. This therefore makes it difficult to develop generators with a higher pressure for the production of hydrogen.

### DESCRIPTION OF THE INVENTION

The invention relates to a hydrogen generator comprising a stack of at least one functional element. The stack comprises an anode for the production of oxygen, a cathode for the production of hydrogen and a membrane positioned between the anode and the cathode. A type of membrane commonly used in the PEM type hydrogen generators are those of the PFSA type (perfluorosulphonic acid). The membrane used in the hydrogen generator according to a particular and preferred embodiment of this invention is a membrane of the PFSA type modified by a method which will be described later and which represents an additional aspect of the invention.

Both the anode and cathode are formed by the series connection of the functional elements, which also comprise anodes, cathodes and membranes. The connection of said anodes constitutes an anodic circuit and the connection of the cathodes constitutes a cathodic circuit.

According to the invention the anode communicates with an anodic separator and the cathode with a cathodic separator. In said anodic and cathodic separators the gases produced by the dissociation of the water from the intrinsic moisture that has been able to entrain the gas are separated. The anodic separator will therefore contain water and oxygen and the cathodic separator will contain water and hydrogen. The transfer of water from the anodic circuit to the cathodic circuit, via the membranes acting as electrolyte, gives rise to the variability of the free volume to be occupied by the gases, i.e. the free volume for the oxygen or hydrogen will vary according to the water level in each separator.

On the other hand, the hydrogen generator comprises a sealed chamber with a gas inlet connected to a gas source, the stack being located inside said chamber.

The stack is positioned inside the aforementioned sealed chamber, which means that the pressure to which it will be subjected will not be atmospheric pressure, unless atmospheric pressure prevails inside the chamber, which may be controlled in such a manner as to minimise possible pressure gradients between the anodic and cathodic circuits of the stack and the chamber. If the stack is not confined within the chamber, an increase in pressure over the atmospheric pressure in the anode or cathode would have to be tolerated by the seals and walls of the stack. If the stack is confined within the chamber, the increase in pressure inside the stack may be compensated for by an increase in the pressure in the chamber, so that the total pressure exerted on the walls and seals of the stack is zero or less than a certain threshold.

The increase in pressure in the chamber may be effected by connecting the inside of the chamber to the gas produced in the cathode. The hydrogen may be extracted from the stack outside the chamber for subsequent introduction into the chamber via a gas inlet. The pressure in the cathode of the stack will therefore be the same as that in the chamber, except for possible losses that may occur during the transit of gas from the cathode to the chamber. The walls of the stack cathode will therefore be subjected to a total pressure of zero or practically zero.

Alternatively the same objective may be met by injecting into the inside of the chamber an inert gas pressurised via the gas inlet of the chamber. Said inert gas may be nitrogen, for example.

The hydrogen generator also comprises a processor configured to maintain a ratio of the free variable volume of the cathodic separator to the free variable volume of the anodic separator greater than or equal to 2:1.

The dissociation of the water for producing hydrogen and oxygen gives rise to two hydrogen volumes to each volume of oxygen. If the volume which the oxygen may occupy in the anodic separator is less than or equal to half the volume which the hydrogen may occupy in the cathodic separator, the increases in pressure which will be produced during the production of hydrogen will be greater in the anodic separator, where the oxygen is produced, than in the cathodic separator. The modulation or equalisation of the pressure between the anodic and cathodic circuits may therefore be effected by controlling the pressure between the anodic and cathodic circuits by selectively releasing the pressure of the oxygen produced and by controlling the free volumes in both separators, where, if pressure has to be released, it will in no case be necessary to exert any action on the hydrogen produced, thereby avoiding the possibility of accidents due to its high reactivity.

In addition, the cathodic and anodic separators may comprise level sensors. Thanks to these sensors, which may be one or several, according to the design requirements, it will be possible to determine the water level and obtain with this value the free volume in each separator.

The anodic separator may be connected to a water tank, which will be used for supplying water to the hydrogen generator via the connections which the anodic and cathodic separators have with the stack. In addition, since a water supply reduces the free volume for the oxygen, the transfer of water may be controlled by the processor to achieve the above-mentioned volume ratio.

The anodic separator may also be connected to a valve. Said valve enables oxygen to escape from the anodic device. The processor may be configured to open and close said valve selectively according to the pressures prevailing in the two separators.

The hydrogen generator of the invention therefore enables the working pressure of the stack to be increased by pressuring the chamber by means of the gas introduced via the gas inlet of the chamber since the pressures exerted in the stack cathode are compensated for by the pressure created inside the chamber. Similarly, the control of the pressure in the anodic circuit and the free volumes in the anodic and cathodic separators also enable the differential pressure to be controlled between the anodic and cathodic circuits. The maximum outlet pressure of the hydrogen will therefore be conditioned to the mechanical pressure which the elements comprising the chamber are cable to withstand.

The cathode may comprise a valve arranged for the extraction of the hydrogen produced in the generator.

One of the elements which do not tolerate the high mechanical pressures well are the membranes, more particularly the membranes of the of the PFSA type. The authors of this invention have developed a method for modifying a membrane of the PFSA type based on the modification of the molecular structure of the same. Said modification involves the introduction of inorganic compounds capable of conducting protons. In particular, the introduction of zirconium phosphate, besides increasing the resistance of the membrane to the pressure, also improves the electrical resistance of the same, reduces the permeability to gases and does not substantially alter the mechanical properties of the membrane.

A method for modifying a membrane of the PFSA type is therefore an object of this invention and involves:

    a) introducing the membrane into a solution o a strong 1-20% acid,
    b) treating the membrane with 96° ethanol,
    c) impregnating the membrane in a solution of zirconium oxychloride,
    d) bathing the membrane in 10-60% phosphoric acid,
    e) protonating the membrane by bathing the same in a strong 1-20% acid,
    f) drying the membrane.

Optionally but in a preferred manner, the membrane may be subjected to one or more washes in distilled water between each of steps a) to f). Moreover, it is preferable to carry out steps a) to e) at a temperature which may vary between 40 and 100°C.

Specifically, the bath in step a) may be provided with any strong acid, such as hydrochloric acid, although in a particular, preferred embodiment 2-20% nitric acid is used at 70-100°C for one or two hours, depending on the coarseness of the membrane.

The treatment with 96° ethanol in step b) is carried out by a preferred method at 40-70°C over a period of 1-5 minutes.

The impregnation with zirconium oxychloride (step c) is the fundamental step of the method since this is the compound which is to modify the membrane and allow better conduction of protons in the final membrane. In a particular and preferred embodiment the membranes, after step b), are introduced into a container of hot zirconium oxychloride solution. Said container is introduced into a bath of water at 60-90°C. The membranes must remain in the bain marie for a period which may vary from 6 to 20 hours. The quantity of zirconium oxychloride in the solution will normally be determined by the characteristics of the membrane, and will be equal to 5-45% by weight.

After the impregnation with zirconium oxychloride the membrane is preferably introduced into a solution of 1-60% phosphoric acid for a time of between 2 and 4 hours. The phosphoric acid bath is preferably between 60 and 90°C.

The membrane is then protonated (step e), preferably with a solution of 2-20% nitric acid and at a temperature of 70-100°C for a period of between 1 and 2 hours.

Finally, and before being used inside the hydrogen generator of the invention, the membrane is dried. The drying may be carried out at ambient temperature, although it may be carried out at approximately 100°C for around 3 hours to accelerate the process.

A membrane obtainable by the method described above also constitutes the object of this invention.

## DESCRIPTION OF THE DRAWINGS

To supplement the description being given, and with a view to providing a better understanding of the characteristics of the invention, a set of drawings is attached as an integral part of said description in which the following has been shown by way of non-exhaustive illustration:

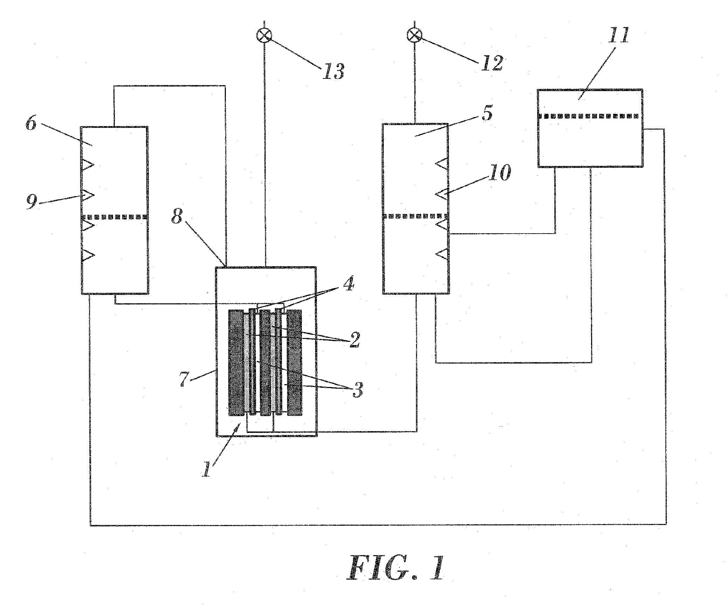

Figure 1. - Shows a diagram of the hydrogen generator of the invention.

## PREFERRED EMBODIMENT OF THE INVENTION

## Example 1: modification of the PFSA type membrane

In this example a description is given of the modification of a PFSA type membrane (Nafion 117, DuPont).

In the first place both the acid solutions and the impregnation solution of zirconium oxychloride were prepared for use in the different steps of the method.

Solutions of nitric and phosphoric acid, at 10% and 30% respectively, were prepared in two volumetric flasks of one litre each.

The oxychloride solution was prepared by dissolving in a one litre flask of distilled water 5 grams of zirconium oxychloride. The oxychloride was dissolved by agitation, and after total dissolution of the same, the solution was filtered.

The membrane was then immersed in a bath at 80°C (specify the specific temperature used) in the previously prepared nitric acid solution. The membrane was treated for one hour and was subjected to two washes with distilled water. The membrane was boiled for one hour.

The next step consisted in treating with 96° ethanol for 5 minutes at 60° C.

The previously prepared zirconium oxychloride solution was then sampled and heated. The membranes were immersed in the hot solution and the container was introduced into a water bath at 85°C for 16 hours.

Immediately after the impregnation with zirconium oxychloride the membranes were washed with distilled water and immersed in the previously prepared phosphoric acid solution. The solution was then heated to 80°C and was maintained at that temperature for 4 hours. After this time it was washed with distilled water.

The membrane was then protonated by means of a final bath in the previously prepared nitric acid at a temperature of 95°C for two hours.

After this treatment with nitric acid the membrane was washed with distilled water and dried in a kiln at 100°C for 3 hours.

The membrane thus obtained was installed in the generator described in example 2.

## Example 2: hydrogen generator

A description is given, with reference to the figures, of a preferred embodiment of the hydrogen generator constituting the object of this invention.

Figure 1 shows a chamber (7) which contains, in its interior, the stack (1) in which hydrogen and oxygen are produced. Said stack (1) is formed by a series of functional elements connected in series. The stack (1) comprises an anode (2), a cathode (3) and a membrane (4) such as that obtained in example 1, which separates said anode (2) and cathode (3). The anode (2) inside the chamber (7) is connected to an anodic separator (5) without any communication between the anode (2) and the interior of the chamber (7). Similarly the cathode (3) is connected to a cathodic separator (6). During the production of hydrogen, both the hydrogen produced and the oxygen entrain water with them, either in liquid or vapour form, which water must be separated from the gases produced. This function is performed in the anodic separator (5) for the oxygen and the cathodic separator (6) for the hydrogen.

The cathodic separator (6) is additionally connected to the interior of the chamber (7) via a gas inlet (8), so that the pressure that prevails in the cathode (3) is transmitted to the chamber (7) by injecting hydrogen into the interior of the chamber (7), the pressure due to the possible losses suffered between the cathode (3) and the chamber (7) being the only difference there may be.

The anodic separator (5) is connected to a water tank (11). Said tank (11) will supply the raw material for the production of hydrogen via the communication that exists between the anodic separator (5) and the stack (1). Similarly, it will be possible to control the free volume of the anodic separator (5) by the supply of water using a pump controlled by a processor.

Both separators (5, 6) are provided with a water outlet, where water which, once removed from the separator (5, 6), may be stored in a previously mentioned water tank (11). As in the previous case, by draining more or less water from the separators (5, 6), and by selectively removing the pressure from the anode, actions which are also controlled by the processor, the ratio of volumes and pressures between the two separators (5, 6) may be modulated. Pressure may be removed from the anode by means of a valve (12) which, when opened, allows the discharge of oxygen. As has already been mentioned, said valve (12) is connected by the processor.

The ratio which must be maintained between the free volumes of the cathodic (6) and anodic (5) is as follows:

$$V_{O2} \leq 1/2\ V_{H2}$$

Where $V_{o2}$ denotes the free volume of the cathodic separator (6) and $V_{H2}$ denotes the free volume of the anodic separator (5). Said free volumes are measured in the cathodic separator (6) and in the anodic separator (5) by means of level sensors (9, 10).

Therefore, if the anodic separator (5) has a free volume of four litres, the free volume in the cathodic separator (6) will have to be at least eight litres. If at that time the free volume were to be seven litres, one possible alternative could be to drain one litre of water from the cathodic separator (6), thereby increasing the free volume by one litre. A second alternative could be to inject half a litre from the water tank (11) into the anodic separator (5), thereby achieving the same objective. The selection between one alternative or the other may be made on the basis, for example, of the maximum and minimum free volumes of the anodic (5) and cathodic (6) separators and of the free volumes measured in the separators (5, 6).

The hydrogen produced will be discharged by means of a valve (13).

In the light of this description and the set of figures, the person skilled in the art will be able to understand that the invention has been described according to a preferred embodiment of the same, but that multiple variations can be made to said preferred embodiment without departing from the object of the invention as claimed.

**Claims**

1. A hydrogen generator which comprises a stack (1) of at least one functional, element, said stack (1) comprising an anode (2) for the production of oxygen, a cathode (3) for the production of hydrogen and a membrane (4) positioned between the anode (2) and the cathode (3), **characterised in that** the anode (2) communicates with an anodic separator (5) and the cathode (3) with a cathodic separator (6), wherein the anodic separator (5) has a free variable volume and the cathodic separator (6) having a free variable volume, and **in that** the hydrogen generator additionally comprises a sealed chamber (7) with a gas inlet (8) connected to a gas source, wherein the stack (1) is positioned inside the chamber (7), and a processor configured to maintain a ratio of the free variable volume of the cathodic separator (6) to the free variable volume of the anodic separator (5) that is higher than or equal to 2:1.

2. The hydrogen generator according to Claim 1, **characterised in that** the gas source is the cathode (3).

3. The hydrogen generator according to Claim 1, **characterised in that** the gas source is an inert gas tank.

4. The hydrogen generator according to any one of Claims 1-3, **characterised in that** the cathodic separator (6) comprises at least one level sensor (9).

5. The hydrogen generator according to any one of Claims 1-4, **characterised in that** the anodic separator (5) comprises at least one level sensor (10).

6. The hydrogen generator according to any one of Claims 1 - 5, **characterised in that** the anodic separator (5) is connected to a water tank (11), wherein the processor is configured to transfer water selectively from the water tank (11) to the anodic separator (5).

7. The hydrogen generator according to any one of Claims 1 - 6, **characterised in that** the anodic separator (5) is connected to a valve (12), wherein the processor is configured to open and close the valve (12) selectively.

8. The hydrogen generator according to any one of Claims 1 - 7, **characterised in that** the cathode (3) comprises a valve (13) for the removal of the hydrogen produced.

9. The hydrogen generator according to any one of Claims 1 - 7, **characterised in that** it comprises a membrane (4) of the PFSA type modified by the method according to any one of Claims 10-12.

10. A method for modifying a membrane of the RFSA type, which involves:

    a) introducing the membrane into a solution o a strong 1-20% acid,
    b) treating the membrane with 96° ethanol,
    c) impregnating the membrane in a solution of zirconium oxychloride,

d) bathing the membrane in 10-60% phosphoric acid,

e) protonating the membrane by bathing the same in a strong 1-20% acid,

f) drying the membrane.

11. The method according to Claim 10, **characterised in that** the membrane is subjected to one or more washes with distilled water between each of the steps a) to f).

12. The method according to any one of Claims 9 or 10, **characterised in that** the steps a)-f) are implemented at a temperature of between 40 and 100°C.

13. A membrane obtainable by the method of any one of Claims 10-12.

FIG. 1

# INTERNATIONAL SEARCH REPORT

| International application No. |
| --- |
| PCT/ ES 2010/070020 |

A. CLASSIFICATION OF SUBJECT MATTER

see extra sheet

According to International Patent Classification (IPC) or to both national classification and IPC

B. FIELDS SEARCHED

Minimum documentation searched (classification system followed by classification symbols)

C25B, B01D, H01M

Documentation searched other than minimum documentation to the extent that such documents are included in the fields searched

Electronic data base consulted during the international search (name of data base and, where practicable, search terms used)

INVENES,EPODOC, WPI, TXT, XPESP, HCAPLUS

C. DOCUMENTS CONSIDERED TO BE   RELEVANT

| Category* | Citation of document, with indication, where appropriate, of the relevant passages | Relevant to  claim No. |
| --- | --- | --- |
| X | CHEN, L. et al. Nafion/PTFE and zirconium phosphate modified Nafion/PTFE composite membranes for direct methanol fuel cells. 14.03.2007, Journal of Membrane Science (2008) Vol. 307, páginas 10-20; parte experimental. | 9-13 |
| X | LEE, H.et al. A study on self-humidifying PEMFC using Pt-ZrP-Nafion composite membrane. 25.09.2004, Electrochimica Acta, (2005) Vol.50, páginas 761-768; parte experimental. | 9-13 |
| Y | US 2004072040 A1 (UNIV MASSACHUSETTS LOWELL) 15.04.2004, párrafos [32-59]; figuras 1,6. | 1-8 |
| Y | EP 1473386 A1 (MITSUBISHI CORP) 03.11.2004, párrafos [90-95]; figura 1. | 1-8 |
| A | US 5783051 A (SHINKO PANTEC CO LTD) 21.07.1998, columna 2, línea 34 - columna 4, línea 4; figura 5. | 1-8 |

☒ Further documents are listed in the continuation of Box C.          ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. "E" earlier document but published on or after the international filing date | |
| "L" document which may throw doubts on priority claim(s) or which is cited to establish the publication date of another citation or other special reason (as specified) "O" document referring to an oral disclosure use, exhibition, or other means "P" document published prior to the international filing date but later than the priority date claimed | "X" document of particular relevance; the claimed invention cannot be considered novel or cannot be considered to involve an inventive step when the document is taken alone "Y" document of particular relevance; the claimed invention cannot be considered to involve an inventive step when the document is combined with one or more other documents , such combination being obvious to a person skilled in the art |
| | "&" document member of the same patent family |

| Date of the actual completion of the international search | Date of mailing of the international search report |
| --- | --- |
| 10 June 2010          (10.06.2010) | (30/06/2010) |
| Name and mailing address of the ISA/ O.E.P.M. Paseo de la Castellana, 75 28071 Madrid, España. Facsimile No.   34 91 3495304 | Authorized officer M. García González Telephone No. +34 91 349 53 15 |

Form PCT/ISA/210 (second sheet) (July 2009)

## INTERNATIONAL SEARCH REPORT

International application No.

PCT/ES 2010/070020

| C (continuation). | DOCUMENTS CONSIDERED TO BE RELEVANT | |
|---|---|---|
| Category* | Citation of documents, with indication, where appropriate, of the relevant passages | Relevant to claim No. |
| A | US 5919583 A (DU PONT) 06.07.1999, column 7, lines 4-24; example 1. | 9-13 |

Form PCT/ISA/210 (continuation of second sheet) (July 2009)

INTERNATIONAL SEARCH REPORT

| International application No. |
| --- |
| PCT/ES 2010/070020 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

The international application lacks unity of invention, since it includes two inventions, covered by the following claims:
Invention 1: claims 1-8, relating to a hydrogen generator.
Invention 2: claims 9-13, relating to a method for modifying a PFSA-type membrane, said modified membrane and the use thereof in a hydrogen generator.
These two inventions are not so linked as to form a single general inventive concept and therefore do not meet the requirements of PCT Rule 13.1.

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☒ No protest accompanied the payment of additional search fees.

Form PCT/ISA/210 (continuation of first sheet (2)) (July 2009)

## INTERNATIONAL SEARCH REPORT

Information on patent family members

| International application No. |
|---|
| PCT/ ES 2010/070020 |

| Patent document cited in the search report | Publication date | Patent family member(s) | Publication date |
|---|---|---|---|
| US 2004072040 A | 15.04.2004 | US 7097748 B | 29.08.2006 |
| | | | 29.08.2006 |
| | | | 29.08.2006 |
| EP 1473386 A | 03.11.2004 | US 2003141200 A | 31.07.2003 |
| | | US 7048839 B | 23.05.2006 |
| | | WO 03064727 A | 07.08.2003 |
| | | CA 2446563 A | 07.08.2003 |
| | | JP 2003221690 A | 08.08.2003 |
| | | JP 4010152 B | 21.11.2007 |
| | | JP 2003277963 A | 02.10.2003 |
| | | JP 4010165 B | 21.11.2007 |
| | | IS 7045 A | 20.11.2003 |
| | | NO 20034366 A | 28.11.2003 |
| | | JP 2003342773 A | 03.12.2003 |
| | | JP 4010185 B | 21.11.2007 |
| | | JP 2004018982 A | 22.01.2004 |
| | | JP 4010193 B | 21.11.2007 |
| | | BR 0302900 A | 06.07.2004 |
| | | CN 1514890 A | 21.07.2004 |
| | | CN 1330792 C | 08.08.2007 |
| | | EP 20030701743 | 16.01.2003 |
| | | TW 226909 B | 21.01.2005 |
| | | MXPA 03010957 A | 08.04.2005 |
| | | RU 2003133444 A | 10.04.2005 |
| | | US 2006157354 A | 20.07.2006 |
| | | HK 1065570 A | 18.10.2007 |
| US 5783051 A | 21.07.1998 | JP 8239789 A | 17.09.1996 |
| | | JP 2911381 B | 23.06.1999 |
| US 5919583 A | 06.07.1999 | WO 9629752 A | 26.09.1996 |
| | | EP 0815606 AB | 07.01.1998 |
| | | EP 19960914546 | 20.03.1996 |
| | | JP 2000516014 T | 28.11.2000 |
| | | JP 3827018 B | 27.09.2006 |
| | | DE 69608793 T | 01.02.2001 |

Form PCT/ISA/210 (patent family annex) (July 2009)

**INTERNATIONAL SEARCH REPORT**

International application No.

PCT/ ES 2010/070020

CLASSIFICATION OF SUBJECT MATTER

*C25B 1/04* (2006.01)
*B01D 67/00* (2006.01)
*H01M 8/10* (2006.01)

Form PCT/ISA/210 (extra sheeet) (July 2009)